(19) Europäisches Patentamt / European Patent Office / Office européen des brevets

(11) **EP 2 551 015 A1**

(12) **EUROPEAN PATENT APPLICATION**
published in accordance with Art. 153(4) EPC

(43) Date of publication:
**30.01.2013 Bulletin 2013/05**

(21) Application number: **11759584.3**

(22) Date of filing: **25.03.2011**

(51) Int Cl.:
**B01J 35/02** (2006.01)   **B01J 21/06** (2006.01)
**B05D 5/00** (2006.01)   **C09D 1/00** (2006.01)

(86) International application number:
**PCT/JP2011/057383**

(87) International publication number:
**WO 2011/118780 (29.09.2011 Gazette 2011/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2010 JP 2010170081**
**25.03.2010 JP 2010070196**

(71) Applicant: **TOTO LTD.**
**Kitakyushu-shi**
**Fukuoka 802-8601 (JP)**

(72) Inventors:
• **HAYAKAWA, Makoto**
**Kitakyushu-shi**
**Fukuoka 802-8601 (JP)**
• **OMOSHIKI, Koji**
**Kitakyushu-shi**
**Fukuoka 802-8601 (JP)**

• **KITAZAKI, Satoru**
**Kitakyushu-shi**
**Fukuoka 802-8601 (JP)**
• **FUJII, Hiroyuki**
**Kitakyushu-shi**
**Fukuoka 802-8601 (JP)**
• **KANNO, Mitsuyoshi**
**Kitakyushu-shi**
**Fukuoka 802-8601 (JP)**
• **KAMESHIMA, Junji**
**Kitakyushu-shi**
**Fukuoka 802-8601 (JP)**

(74) Representative: **Grünecker, Kinkeldey,**
**Stockmair & Schwanhäusser**
**Leopoldstrasse 4**
**80802 München (DE)**

(54) **PHOTOCATALYST-COATED BODY AND PHOTOCATALYST COATING LIQUID**

(57) Disclosed are a photocatalyst-coated body that can realize a good weather resistancce, a photocatalyst-coated body that, in removing NOx, particularly in removing NOx in air, can suppress the production of an intermediate product such as $NO_2$ while increasing the NOx removed, and a photocatalytic coating liquid for use in the formation of the photocatalyst-coated body. The photocatalyst-coated body comprises a photocatalyst layer provided on a substrate. The photocatalyst layer comprises at least photocatalytic titanium oxide particles, silica particles, and a product obtained by drying water soluble zirconium compound. When the photocatalyst layer is presumed to be totally 100% by mass, the content of the photocatalytic titanium oxide particles are not less than 1% by mass and not more than 20% by mass, the content of the silica particles are not less than 51 % by mass and not more than 98% by mass, and the content of the product obtained by drying water soluble zirconium compound is not less than 1% by mass and not more than 48% by mass in terms of zirconium oxide ($ZrO_2$).

EP 2 551 015 A1

**Description**

TECHNICAL FIELD

The present invention relates to a photocatalyst-coated body and a photoctalytic coating liquid for photocatalyst-coated body formation.

BACKGROUND ART

Photocatalysts such as titanium oxide have recently become extensively utilized. Activity excited by photoenergy of photocatalysts can be utilized to decompose various harmful substances or to hydrophilify a surface of a member with a photocatalyst particle-containing surface layer formed thereon, whereby fouling deposited on the surface by water can easily be washed away.

A method in which the layer is formed utilizing a binder component having corrosion resistance to a photocatalyst and is brought into close contact with a surface of a substrate, is known as a method for the formation of a photocatalyst particle-containing layer on a surface of a substrate (for example, JP H07(1995)-171408A (PTL 1)).

Various types of binders have been proposed in these methods. Examples thereof include fluororesins (for example, JP H07(1995)-171408A (PTL 1)), silicones (for example, JP 2005-161204A (PTL 2)), silica particles (for example, JP 2008-264747A (PTL 3)), zirconium compounds (for example, WO 99/28393 (PTL 4), JP 2007-055207A (PTL 5)), aluminum compounds (for example, JP 2009-39687A (PTL 6)).

In the construction of the photocatalyst layer formed on a surface of a substrate, when the substrate is an organic material, there is a possibility that the organic material is decomposed or deteriorated by photocatalystic activity of the photocatalyst. To cope with this problem, a technique is known in which an adhesive layer such as a silicone-modified resin is provided between the photocatalyst layer and the substrate to protect the substrate as the substrate from a deterioration caused by photocatalytic action (WO 97/00134 (PTL 7)). In this prior art, an example in which the amount of the photocatalyst exceeds 20% by weight was disclosed. Further, it is described that the decomposition or deterioration of the substrate could be effectively prevented.

A proposal has also been made in which an intermediate layer comprising a silicone-modified resin and an organic antimold agent is provided between a photocatalyst layer and a substrate to prevent the decomposition and deterioration of the substrate (JP 2008-272718A (PTL 8)).

Further, a method is also adopted in which various harmful substances such as NOx are decomposed by the utilization of photocatalysts such as titanium oxide.

Various proposals on a technique in which NOx is decomposed utilizing photocatalysts have been made (for example, JP H01(1989)-218622A (PTL 9), JP 2001-162176A (PTL 10), JP 2008-264747A (PTL 3)). Further, in order to develop the above function on various substrates, methods are widely known in which photocatalyst particles are immobilized on a substrate using various binders (for example, JP H07(1995)-171408A (PTL 1), WO 97/00134 (PTL 7), and WO 99/28393 (PTL 4)).

What is important of NOx decomposition is to efficiently decompose NOx and, at the same time, to suppress the production of harmful intermediate products such as $NO_2$. In decomposing NOx by photocatalysts, the development of a technique that can suppress the production of harmful intermediate products is desired.

[Citation List]

[Patent Literature]

[PTL 1] JP H07(1995)-171408A
[PTL 2] JP 2005-161204A
[PTL 3] JP 2008-264747A
[PTL 4] WO 99/28393
[PTL 5] JP 2007-055207A
[PTL 6] JP 2009-39687A
[PTL 7] WO 97/00134
[PTL 8] JP 2008-272718A
[PTL 9] JP H01 (1989)-218622A
[PTL 10] JP 2001-162176A
[PTL 11] JP H09(1997)-227156A

## SUMMARY OF THE INVENTION

The present inventors have now found that the construction of a photocatalyst layer comprising photocatalytic titanium oxide particles, silica particles, and a specific zirconium compound in a specific proportion can realize a good weather resistancce, that is, effective prevention of decomposition or deterioration of the substrate. It has also been found that the construction of a photocatalyst layer comprising photocatalytic titanium oxide particles, silica particles, and a specific zirconium compound at a specific ratio, the content of the particulate component being regulated, is advantageous in that, in removing NOx, particularly in removing NOx in the air, the production of intermediate products such as $NO_2$ can be suppressed while enhancing the amount of NOx removed. The present invention has been found based on such finding.

According to a first aspect of the present invention, there is provided a photocatalyst-coated body that can realize a good weather resistancce and to provide a photocatalytic coating liquid for use in photocatalyst-coated body formation.

According to a second aspect of the present invention, there is provided a photocatalyst-coated body that, in removing NOx, particularly in removing NOx in the air, can suppress the production of intermediate products such as $NO_2$ while enhancing the amount of NOx removed and to provide a photocatalytic coating liquid for use in photocatalyst-coated body formation.

The photocatalyst-coated body according to the first aspect of the present invention comprises a substrate; and a photocatalyst layer provided on the substrate, wherein
the photocatalyst layer comprises at least photocatalytic titanium oxide particles, silica particles, and a product obtained by drying water soluble zirconium compound, and
when the photocatalyst layer is presumed to be totally 100% by mass,
the content of the photocatalytic titanium oxide particles is not less than 1% by mass and not more than 20% by mass,
the content of the silica particles is not less than 51% by mass and not more than 98% by mass, and
the content of the product obtained by drying water soluble zirconium compound is not less than 1% by mass and not more than 48% by mass in terms of zirconium oxide ($ZrO_2$).

The photocatalytic coating liquid according to the first aspect of the present invention comprises at least photocatalytic titanium oxide particles, silica particles, a water soluble zirconium compound, and water, wherein, based on the total solid content of the photocatalytic coating liquid,
the proportion of the photocatalytic titanium oxide particles is not less than 1% by mass and not more than 20% by mass,
the proportion of the silica particles is not less than 51% by mass and not more than 98% by mass, and
the proportion of the water soluble zirconium compound in terms of $ZrO_2$ is not less than 1% by mass and not more than 48% by mass.

The photocatalyst-coated body according to the second aspect of the present invention comprises a substrate; and a photocatalyst layer provided on the substrate, wherein
the photocatalyst layer comprises at least photocatalytic titanium oxide particles, silica particles, and a product obtained by drying water soluble zirconium compound, and
when the photocatalyst layer is presumed to be totally 100% by mass,
the content of the photocatalytic titanium oxide particles is not less than 1% by mass and not more than 20% by mass,
the content of the silica particles is not less than 51% by mass and not more than 98% by mass,
the content of the product obtained by drying water soluble zirconium compound is not less than 1% by mass and not more than 15% by mass in terms of zirconium oxide ($ZrO_2$),
the photocatalyst layer contains not less than 0% by mass and not more than 47% by mass of a particulate component other than the photocatalytic titanium oxide particles and the silica particles, and
the total content of the particulate component in the photocatalyst layer is not less than 85% by mass and not more than 99% by mass.

The photocatalytic coating liquid according to the second aspect of the present invention comprises at least photocatalytic titanium oxide particles, silica particles, a water soluble zirconium compound, and water, wherein, based on the total solid content of the photocatalytic coating liquid,
the proportion of the photocatalytic titanium oxide particles is not less than 1% by mass and not more than 20% by mass,
the proportion of the silica particles is not less than 51% by mass and not more than 98% by mass, and
the proportion of the water soluble zirconium compound in terms of $ZrO_2$ is not less than 1% by mass and not more than 15% by mass, and which
further comprises not less than 0% by mass and not more than 47% by mass of a particulate component other than the photocatalytic titanium oxide particles and the silica particles, and
has a total particulate component content of not less than 85% by mass and not more than 99% by mass.

Another object of the present invention is to provide use of a photocatalyst-coated body according to the present invention for the decomposition of NOx.

Still another object of the present invention is to provide a method for decomposing NOx, the method comprising bringing the photocatalyst-coated body according to the present invention and NOx into contact with each other.

DESCRIPTION OF EMBODIMENTS

First aspect of the present invention

Photocatalyst-coated body

The photocatalyst-coated body according to the first aspect of the present invention has a basic structure comprising a substrate and a photocatalyst layer provided on the substrate.

The photocatalyst layer comprises at least photocatalytic titanium oxide particles, silica particles, and a product obtained by drying a water soluble zirconium compound, and, when the photocatalyst layer is presumed to be totally 100% by mass, the content of the photocatalytic titanium oxide particles is not less than 1% by mass and not more than 20% by mass, the content of the silica particles is not less than 51% by mass and not more than 98% by mass, and the content of the product obtained by drying water soluble zirconium compound is not less than 1% by mass and not more than 48% by mass in terms of zirconium oxide ($ZrO_2$). The substrate and the photocatalyst layer in the basic structure of the photocatalyst-coated body according to the first aspect of the present invention will be described.

Substrate

Various materials regardless of inorganic or organic materials may be used in the substrate in the present invention as long as a photocatalyst layer can be formed on the material. Further, the shape of the substrate is not also limited. Examples of preferred substrates from the viewpoint of material include metals, ceramics, glass, plastics, rubbers, stones, cement, concrete, fibers, woven fabrics, wood, paper, combinations thereof, laminates thereof, and materials formed of the above materials with a film of at least one layer provided thereon. Examples of preferred substrates from the viewpoint of applications include building materials, exterior of buildings, window frames, window glass, structural members, exterior and coating of vehicles, exterior of mechanical devices or articles, dust covers and coating, traffic signs, various display devices, advertising pillars, sound insulation walls for roads, insulation walls for railways, bridges, exterior and coating of guard rails, interior and coating of tunnels, insulators, solar battery covers, heat collection covers for solar water heaters, PVC greenhouses, covers for vehicle illuminating lamps, outdoor lighting equipment, tables, and exterior materials for application onto the surface of the above articles, for example, films, sheets, and seals.

Advantages in the first aspect of the present invention can be advantageously exerted in substrates having a surface containing an organic material. Examples of such substrates include organic material-containing resins, coated bodies having a surface with an organic material-containing resin applied thereon, and laminates having a surface with a film or the like containing an organic material-containing resin stacked thereon. Substrates applicable from the viewpoint of applications include metal laminated sheets or plates such as metal coated sheets or plates, and vinyl chloride steel sheets or plates, ceramic decorative sheets or plates, and building materials such as resin building materials, exterior of buildings, interior of buildings, window frames, window glass, structural members, exterior and coating of vehicles, exterior of mechanical devices and articles, dust covers and coating, traffic signs, various display devices, advertising pillars, sound insulation walls for roads, insulation walls for railways, bridges, exterior and coating of guard rails, interior and coating of tunnels, insulators, solar battery covers, heat collection covers for solar water heaters, PVC greenhouses, covers for vehicle illuminating lamps, housing equipment, stools, bath tubs, washstands, lighting equipment, illumination lamp covers, kitchenwares, tablewares, dish washers, dish driers, sinks, range cooks, kitchen hoods, and ventilating fans. In particular, in the present invention, the utilization of metal-coated sheets or plates or metal laminated sheets or plates as the substrate is preferred from the viewpoint of low susceptibility to deterioration/corrosion.

In conventional photocatalyst-coated bodies, in order to suppress the influence of the photocatalytic activity of the photocatalyst layer on the substrate, it is common practice to provide a layer of a silicone resin between the photocatalyst layer and the substrate. According to the present invention, instead of the silicone resin commonly provided in the prior art, the photocatalyst layer can also be provided directly on a substrate formed of an organic material. As a result, the present invention is very advantageous in that the range of utilization and application can be greatly extended.

Photocatalyst layer in photocatalyst-coated body

The photocatalyst layer in the photocatalyst-coated body according to the present invention has a basic construction comprising at least photocatalytic titanium oxide particles, silica particles, and a product obtained by drying water soluble zirconium compound, and, when the photocatalyst layer is presumed to be totally 100% by mass, the content of the photocatalytic titanium oxide particles is not less than 1% by mass and not more than 20% by mass, the content of the silica particles is not less than 51 % by mass and not more than 98% by mass, and the content of the product obtained by drying water soluble zirconium compound is not less than 1% by mass and not more than 48% by mass in terms of zirconium oxide ($ZrO_2$).

In the present invention, the photocatalyst layer includes a complete film form or, for example, a partially film form, as long as photocatalytic titanium oxide particles are present on the surface of the substrate. Further, the photocatalyst layer may be present in an islandlike discrete form. In a preferred embodiment of the present invention, the photocatalyst layer is formed by applying a coating liquid.

The photocatalytic titanium oxide particles used in the present invention are not particularly limited as long as the particles are titanium oxide particles having photocatalytic activity. Preferred examples thereof include anatase form of titanium oxide, rutile form of titanium oxide, and brookite form of titanium oxide. More preferred are particles of anatase form of titanium oxide.

In a preferred embodiment of the present invention, the content of the photocatalytic titanium oxide particles in the photocatalyst layer is preferably not less than 1% by mass and not more than 20% by mass, more preferably not less than 1% by mass and not more than 15% by mass, still more preferably not less than 1% by mass and not more than 10% by mass, most preferably not less than 1% by mass and not more than 5% by mass. When the amount of the photocatalyst is in the above-defined range, in removing NOx, particularly in removing NOx in the air, the production of intermediate products such as $NO_2$ can be suppressed while enhancing the amount of NOx removed and, at the same time, excellent photocatalyst corrosion resistance can be exerted even when an organic material is contained in the substrate.

In a preferred embodiment of the present invention, the number average particle diameter of the photocatalytic titanium oxide particles as determined by measuring the length of 100 randomly selected particles in a visual field at a magnification of 200,000 times under a scanning electron microscope is more than 10 nm and not more than 100 nm, more preferably not less than 10 nm and not more than 60 nm. When the size of the photocatalytic titanium oxide particles is regulated in the above-defined range, the gas decomposition activity of the photocatalyst is more stably exerted. The average particle diameter is calculated as a number average value determined by measuring the length of 100 randomly selected particles in a visual field at a magnification of 200,000 times under a scanning electron microscope. The shape of the particles is most preferably spherical and may also be substantially circular or elliptical. In this case, the length of the particles is approximately calculated as ((major axis + minor axis)/2). This is true of the number average particle diameter described below in the present specification.

Further, in the present invention, the photocatalyst layer further comprises silica particles and may further comprise other inorganic oxide particles. Examples of other inorganic oxide particles include particles of single oxides such as zinc oxide, tin oxide, tungsten oxide, alumina, zirconia, ceria, yttria, boronia, magnesia, calcia, ferrite, amorphous form of titania, and hafnia; and particles of composite oxides such as strontium titanate, barium titanate, and calcium silicate.

The presence of silica particles can realize the suppression of the production of intermediate products such as $NO_2$ while enhancing the amount of NOx removed in removing NOx, particularly in removing NOx in the air and, at the same time, can realize an improvement in hydrophilicity persistence of the photocatalyst layer.

The content of the silica particles in the photocatalyst layer is not less than 51% by mass and not more than 98% by mass, more preferably not less than 56% by mass and not less than 95% by mass, most preferably not less than 61% by mass and not more than 95% by mass. When the content of the silica particles is in the above-defined range, in removing NOx, particularly in removing NOx in the air, the production of intermediate products such as $NO_2$ can be suppressed while enhancing the amount of NOx removed and, at the same time, in application to an organic substrate, a deterioration in the organic substrate can be greatly suppressed.

In a preferred embodiment of the present invention, the number average particle diameter of the silica particles as determined by measuring the length of 100 randomly selected particles in a visual field at a magnification of 200,000 times under a scanning electron microscope is preferably more than 5 nm and not more than 50 nm, more preferably not less than 10 nm and not more than 40 nm, still more preferably not less than 10 nm and not more than 30 nm. When the size of the silica particles is regulated to the above-defined range, in removing NOx, particularly in removing NOx in the air, the production of intermediate products such as $NO_2$ can be suppressed while enhancing the amount of NOx removed and, at the same time, the abrasion resistance of the photocatalyst layer can be improved.

In the present invention, the content of the particulate component in the photocatalyst layer is not less than 85% by mass and not more than 99% by mass, preferably not less than 90% by mass and not more than 95% by mass.

In a preferred embodiment of the present invention, the thickness of the photocatalyst layer is preferably not more than 3 $\mu$m, more preferably not less than 0.2 $\mu$m and not more than 3 $\mu$m, most preferably not less than 0.5 $\mu$m and not more than 3 $\mu$m. When the thickness of the photocatalyst layer is less than 3 $\mu$m, in removing NOx, particularly in removing NOx in the air, the transparency of the photocatalyst layer is ensured, and, at the same time, the production of intermediate products such as $NO_2$ can be suppressed while enhancing the amount of NOx removed. A photocatalyst layer thickness of not less than 0.5 $\mu$m is advantageous in that, when the substrate is an organic substrate, ultraviolet light is less likely to reach the substrate and, thus, the weather resistancce of the substrate can be improved.

Further, in a preferred embodiment of the present invention, in order to develop a high level of antimicrobial, antiviral, and antimold properties, at least one metal selected from the group consisting of vanadium, iron, cobalt, nickel, palladium, zinc, ruthenium, rhodium, copper, cuprous oxide, cupric oxide, silver, silver oxide, platinum, and gold and/or at least one metal compound of the metal(s) may be allowed to exist in the photocatalyst layer. Preferably, the presence of the metal and/or the metal compound does not affect the formation of gaps among the photocatalytic titanium oxide particles and the inorganic oxide particles. Accordingly, the addition amount of the metal and/or the metal compound may be very small, and the amount of the metal and/or the metal compound necessary for the development of the action is very small. Specifically, the addition amount is preferably approximately 0.001 to 10% by mass, more preferably 0.05 to 5% by mass, based on the photocatalyst.

In the first aspect of the present invention, the content of the product obtained by drying water soluble zirconium compound in the photocatalyst layer is not less than 1% by mass and not more than 48% by mass, more preferably not less than 4% by mass and not more than 34% by mass, in terms of zirconium oxide ($ZrO_2$) based on the photocatalyst layer.

In the present invention, examples of water soluble zirconium compounds include basic water soluble zirconium compounds such as ammonium zirconium carbonate, potassium zirconium carbonate, ammonium zirconium carbonate, and sodium zirconium phosphate, and acidic water soluble zirconium compounds such as zirconium oxychloride, zirconium hydroxychloride, zirconium nitrate, zirconium sulfate, and zirconium acetate. They may be used either solely or as a mixture of two or more.

In the present invention, not less than 0% by mass and not more than 10% by mass of a binder may further be contained as an optional component. At least one material selected, for example, from the group consisting of silicone emulsions, modified silicone emulsions, fluororesin emulsions, silicone resins, modified silicone resins, hydrolyzates/condensates of alkyl silicates, alkali silicates, and hydrolyzates/condensates of metal alkoxides is preferred as the binder.

An ultraviolet shielding agent or an organic antimold agent may be added as an optional component in the photocatalyst layer according to the present invention. Preferably, the ultraviolet shielding agent, the organic antimold agent and the like are not added at all. When the ultraviolet shielding agent, the organic antimold agent and the like are added, the addition amount is not less than 0% by mass and not more than 15% by mass, preferably not less than 0% by mass and not more than 10% by mass, more preferably not less than 0% by mass and not more than 5% by mass on the assumption that the photocatalyst layer is totally 100% by mass. Preferably, the presence thereof does not affect the formation of gaps among the photocatalytic titanium oxide particles and the inorganic oxide particles .

Photocatalytic coating liquid

According to another aspect of the present invention, there is provided a photocatalytic coating liquid suitable for use in the formation of the photocatalyst-coated body according to the present invention, the photocatalytic coating liquid comprising at least photocatalytic titanium oxide particles, silica particles, a water soluble zirconium compound, and water, wherein, based on the total solid content of the photocatalytic coating liquid, wherein the proportion of the photocatalytic titanium oxide particles is not less than 1% by mass and not more than 20% by mass, the proportion of the silica particles is not less than 51% by mass and not more than 98% by mass, and the proportion of the water soluble zirconium compound in terms of $ZrO_2$ is not less than 1% by mass and not more than 48% by mass.

The photocatalytic titanium oxide particles, the silica particles, the product obtained by drying water soluble zirconium compound, and the optional component contained in the coating liquid according to the present invention may be substantially the same as the components constituting the coated body, except that the above components constitutes a liquid composition. Materials mentioned as a preferred embodiment for these components may be added as preferred materials in the coating liquid according to the present invention.

The coating liquid may have any composition as long as the above composition can be realized after drying. Accordingly, the coating liquid will be described regardless of whether the contents including already described matter are repeatedly described for clarity.

The coating liquid according to the present invention comprises photocatalytic titanium oxide particles. The photocatalytic titanium oxide particles used in the present invention are not particularly limited as long as the particles have photocatalytic activity. Preferred examples thereof include particles of titanium oxide such as anatase form of titanium oxide, rutile form of titanium oxide, and brookite form of titanium oxide, and particles of metal oxides such as zinc oxide, tin oxide, strontium titanate, and tungsten oxide. Titanium oxide particles are more preferred, and particles of anatase form of titanium oxide are most preferred.

In a preferred embodiment of the present invention, the content of the photocatalytic titanium oxide particles based on the solid content of the photocatalytic coating liquid is not less than 1% by mass and not more than 20% by mass, more preferably not less than 1% by mass and not more than 15% by mass, still more preferably not less than 1% by mass and not more than 5% by mass. When the content of the photocatalytic titanium oxide particles is in the above-defined range, a photocatalytic coating liquid from which an excellent photocatalyst-coated body can be produced can be provided. In particular, a photocatalyst-coated body can be produced that, in removing NOx, particularly in removing NOx in the air, can suppress the production of intermediate products such as NO$_2$ while enhancing the amount of NOx removed and, at the same time, can exert excellent photocatalyst corrosion resistance even when an organic material is contained in the substrate.

In a preferred embodiment of the present invention, the number average particle diameter of the product obtained by drying the photocatalytic titanium oxide particles as determined by measuring the length of 100 randomly selected particles in a visual field at a magnification of 200,000 times under a scanning electron microscope is preferably more than 10 nm and not more than 100 nm, more preferably not less than 10 nm and not more than 60 nm. When the size of the photocatalytic titanium oxide particles is regulated in the above-defined range, a photocatalytic coating liquid from which an excellent photocatalyst-coated body can be produced can be provided. In particular, a photocatalyst-coated body that can more stably exert gas decomposition activity of the photocatalyst can be produced.

Further, the photocatalytic coating liquid according to the present invention further comprises silica particles and may further comprise other inorganic oxide particles. Examples of other inorganic oxide particles include particles of single oxides of alumina, zirconia, ceria, yttria, boronia, magnesia, calcia, ferrite, amorphous form of titania, hafnia or the like; and particles of composite oxides of barium titanate and calcium silicate.

The presence of the silica particles can realize the provision of a photocatalytic coating liquid from which an excellent photocatalyst-coated body can be produced. In particular, a photocatalyst-coated body can be produced that, in removing NOx, particularly in removing NOx in the air, can suppress the production of intermediate products such as NO$_2$ while enhancing the amount of NOx removed and, at the same time, is improved in hydrophilicity persistence of the photocatalyst layer.

In a preferred embodiment of the present invention, the content of the silica particles based on the solid content of the photocatalytic coating liquid is preferably not less than 51% by mass and not more than 98% by mass, more preferably not less than 61% by mass and not more than 95% by mass, most preferably 61% by mass and not more than 95% by mass. When the content of the silica particles is in the above-defined range, a photocatalytic coating liquid from which an excellent photocatalyst-coated body can be produced can be provided. In particular, a photocatalyst-coated body can be produced that, in removing NOx, particularly in removing NOx in the air, can suppress the production of intermediate products such as NO$_2$ while enhancing the amount of NOx removed and, at the same time, in application to an organic substrate, can significantly suppress a deterioration in the organic substrate.

In a preferred embodiment of the present invention, the number average particle diameter of the silica particles as determined by measuring the length of 100 randomly selected particles in a visual field at a magnification of 200,000 times under a scanning electron microscope is preferably more than 5 nm and not more than 50 nm, more preferably not less than 10 nm and not more than 40 nm, still more preferably not less than 10 nm and not more than 30 nm. When the size of the silica particles is regulated to the above-defined range, a photocatalytic coating liquid from which an excellent photocatalyst-coated body can be produced can be provided. In particular, a photocatalyst-coated body can be produced that, in removing NOx, particularly in removing NOx in the air, can suppress the production of intermediate products such as NO$_2$ while enhancing the amount of NOx removed and, at the same time, can improve the abrasion resistance of the photocatalyst layer.

The photocatalytic coating liquid according to the present invention comprises at least a water soluble zirconium compound. When the total solid content of the coating liquid is presumed to be 100% by mass, the content of the product obtained by drying water soluble zirconium compound is not less than 1% by mass and not more than 48% by mass, more preferably not less than 4% by mass and not more than 34% by mass, in terms of ZrO$_2$.

In the present invention, examples of water soluble zirconium compounds include basic water soluble zirconium compounds such as ammonium zirconium carbonate, potassium zirconium carbonate, ammonium zirconium carbonate, and sodium zirconium phosphate, and acidic water soluble zirconium compounds such as zirconium oxychloride, zirconium hydroxychloride, zirconium nitrate, zirconium sulfate, and zirconium acetate. They may be used either solely or as a mixture of two or more.

In the photocatalytic coating liquid according to the present invention, the total content of the binder component is not less than 0% by mass and not more than 10% by mass. At least one material selected, for example, from the group consisting of silicone emulsions, modified silicone emulsions, fluororesin emulsions, silicone resins, modified silicone resins, hydrolyzates/condensates of alkyl silicates, alkali silicates, and hydrolyzates/condensates of metal alkoxides is suitable as the binder.

The photocatalytic coating liquid according to the present invention is produced by dispersing or dissolving the components described above in connection with the photocatalyst layer in a solvent at the above-defined mass ratio. In the present invention, the solvent is not particularly limited as long as the components can be dispersed or dissolved. However, water or an organic solvent, for example, ethanol, is preferred.

The solid content of the photocatalytic coating liquid according to the present invention is not particularly limited. However, the solid content of the photocatalytic coating liquid is preferably 1 to 20% by mass from the viewpoint of easiness of coating, more preferably 1 to 10% by mass. Accordingly, the amount of the solvent used is such that can provide the solid content. The components constituting the photocatalytic coating composition can be evaluated by separating the coating liquid by ultrafiltration into a particulate component and a filtrate, analyzing the particulate component and the filtrate, for example, by infrared spectroscopy, gel permeation chromatography, or X-ray fluorescence spectroscopy, and analyzing the spectra.

The photocatalytic coating liquid according to the present invention may further comprise an ultraviolet shielding agent, an organic antimold agent and the like. Preferably, the ultraviolet shielding agent, the organic antimold agent and the like are not added at all. When they are added, the addition amount thereof based on the solid content of the photocatalytic coating liquid is not less than 0% by mass and not more than 15% by mass, preferably not less than 0% by mass and not more than 10% by mass, still more preferably not less than 0% by mass and not more than 5% by mass. Preferably, the presence thereof does not affect the formation of gaps among the photocatalytic titanium oxide particles and the inorganic oxide particles after coating on the substrate and drying the coating..

From the viewpoint of developing a higher level of antimicrobial, antiviral, and antimold properties, the photocatalytic coating liquid according to the present invention may contain at least one metal and/or compound of metal selected from the group consisting of vanadium, iron, cobalt, nickel, palladium, zinc, ruthenium, rhodium, copper, cuprous oxide, cupric oxide, silver, silver oxide, platinum, and gold. Preferably, the presence thereof does not affect the formation of gaps among the photocatalytic titanium oxide particles and the inorganic oxide particles. Accordingly, the addition amount thereof may be such a very small amount that is necessary for developing the action. Specifically, the addition amount thereof is preferably approximately 0.001 to 10% by mass, more preferably 0.05 to 5% by mass, based on the photocatalyst.

The photocatalytic coating liquid according to the present invention may further comprise a surfactant as an optional component, and the addition amount thereof is not less than 0 part by mass and less than 10 parts by mass, preferably not less than 0 part by mass and not more than 8 parts by mass, more preferably not less than 0 part by mass and not more than 6 parts by mass, based on the mass of the product obtained by drying the photocatalytic coating liquid. The addition of the surfactant can realize leveling, that is, a smooth and even coating surface. The surfactant is a component that is effective in improving the wettability of the photocatalytic coating liquid. When the wettability is not important, in some cases, preferably, the surfactant is not substantially contained or is not contained at all.

The surfactant may be properly selected by taking into consideration the dispersion stability of the photocatalyst and the inorganic oxide particles and the wetting capability when the coating liquid is coated on the intermediate layer. However, the surfactant is preferably a nonionic surfactant. More preferred are ether-type nonionic surfactants, ester-type nonionic surfactants, polyalkylene glycol nonionic surfactants, fluoro nonionic surfactants, and silicone nonionic surfactants.

Process for producing photocatalyst-coated body

The photocatalyst-coated body according to the present invention can be produced by coating the photocatalytic coating liquid according to the present invention on an optionally heated substrate. Coating methods usable herein include commonly extensively used methods, for example, brush coating, roller coating, spray coating, roll coater coating, flow coater coating, dip coating, flow coating, and screen printing. After coating of the coating liquid onto the substrate, the coated substrate may be dried at room temperature, or alternatively may if necessary be heat dried. Since, however, there is a possibility that, when the coating is heated to such an extent that sintering proceeds, the amount of gaps among the particles is reduced and, consequently, satisfactory photocatalytic activity cannot be provided, it is preferred to select heating temperature and heating time that do not affect the formation of gaps at all or do not significantly affect the formation of gaps. For example, the drying temperature is 5°C or above and 500°C or below. When a resin is contained in at least a part of the substrate, the drying temperature is preferably, for example, 10°C or above and 200°C or below when the heat resistant temperature of the resin and the like are taken into consideration.

Second aspect of the present invention Photocatalyst-coated body

The photocatalyst-coated body according to the second aspect of the present invention has a basic structure comprising a substrate and a photocatalyst layer provided on the substrate.

The photocatalyst layer comprises at least photocatalytic titanium oxide particles, silica particles, and a product obtained by drying a water soluble zirconium compound, and, when the photocatalyst layer is presumed to be totally 100% by mass, the content of the product obtained by drying the water soluble zirconium compound is not less than 1% by mass and not more than 15% by mass in terms of zirconium oxide ($ZrO_2$), and the content of the particulate component other than the photocatalytic titanium oxide particles and the silica particles is not less than 0% by mass and not more than 47% by mass, provided that the total content of the particulate component is not less than 85% by mass and not more than 99% by mass. The substrate and the photocatalyst layer in the basic structure of the photocatalyst-coated body according to the second aspect of the present invention will be described.

Substrate

Various materials regardless of inorganic or organic materials may be used in the substrate in the present invention as long as a photocatalyst layer can be formed on the material. Further, the shape of the substrate is not also limited. Examples of preferred substrates from the viewpoint of material include metals, ceramics, glass, plastics, rubbers, stones, cement, concrete, fibers, woven fabrics, wood, paper, combinations thereof, laminates thereof, and materials formed of the above materials with a film of at least one layer provided thereon. Examples of preferred substrates from the viewpoint of applications include building materials, exterior of buildings, window frames, window glass, structural members, exterior and coating of vehicles, exterior of mechanical devices or articles, dust covers and coating, traffic signs, various display devices, advertising pillars, sound insulation walls for roads, insulation walls for railways, bridges, exterior and coating of guard rails, interior and coating of tunnels, insulators, solar battery covers, heat collection covers for solar water heaters, PVC greenhouses, covers for vehicle illuminating lamps, outdoor lighting equipment, tables, and exterior materials for application onto the surface of the above articles, for example, films, sheets, and seals.

In the second aspect of the present invention as well, the advantage is exerted when the surface of the substrate contains an organic material. Examples of such substrates include organic material-containing resins, coated bodies having a surface with an organic material-containing resin applied thereon, and laminates having a surface with a film or the like containing an organic material-containing resin stacked thereon. Substrates applicable from the viewpoint of applications include metal laminated sheets or plates such as metal coated sheets or plates, and vinyl chloride steel sheets or plates, ceramic decorative sheets or plates, and building materials such as resin building materials, exterior of buildings, interior of buildings, window frames, window glass, structural members, exterior and coating of vehicles, exterior of mechanical devices and articles, dust covers and coating, traffic signs, various display devices, advertising pillars, sound insulation walls for roads, insulation walls for railways, bridges, exterior and coating of guard rails, interior and coating of tunnels, insulators, solar battery covers, heat collection covers for solar water heaters, PVC greenhouses, covers for vehicle illuminating lamps, housing equipment, stools, bath tubs, washstands, lighting equipment, illumination lamp covers, kitchenwares, tablewares, dish washers, dish driers, sinks, range cooks, kitchen hoods, and ventilating fans. In particular, in the present invention, the utilization of metal-coated sheets or plates or metal laminated sheets or plates as the substrate is preferred from the viewpoint of low susceptibility to deterioration/corrosion.

In conventional photocatalyst-coated bodies, in order to suppress the influence of the photocatalytic activity of the photocatalyst layer on the substrate, it is common practice to provide a layer of a silicone resin between the photocatalyst layer and the substrate. According to the present invention, instead of the silicone resin commonly provided in the prior art, the photocatalyst layer can also be provided directly on a substrate formed of an organic material. As a result, the present invention is very advantageous in that the range of utilization and application can be greatly extended.

Photocatalyst layer in photocatalyst-coated body

The photocatalyst layer in the photocatalyst-coated body according to the present invention has a basic construction comprising at least photocatalytic titanium oxide particles, silica particles, and a product obtained by drying water soluble zirconium compound, and, when the photocatalyst layer is presumed to be totally 100% by mass, the content of the product obtained by drying the water soluble zirconium compound is not less than 1% by mass and not more than 15% by mass in terms of zirconium oxide ($ZrO_2$) and the content of the particulate component other than the photocatalytic titanium oxide particles and the silica particles is not less than 0% by mass and not more than 47% by mass, provided that the total content of the particulate component in the photocatalyst layer is not less than 85% by mass and not more than 99% by mass.

In the present invention, the photocatalyst layer includes a complete film form or, for example, a partially film form, as long as photocatalytic titanium oxide particles are present on the surface of the substrate. Further, the photocatalyst layer may be present in an islandlike discrete form. In a preferred embodiment of the present invention, the photocatalyst layer is formed by applying a coating liquid.

The photocatalytic titanium oxide particles used in the present invention are not particularly limited as long as the particles are titanium oxide particles having photocatalytic activity. Preferred examples thereof include anatase form of titanium oxide, rutile form of titanium oxide, and brookite form of titanium oxide. More preferred are particles of anatase form of titanium oxide.

In a preferred embodiment of the present invention, the content of the photocatalytic titanium oxide particles in the photocatalyst layer is preferably not less than 1% by mass and not more than 20% by mass, more preferably not less than 1% by mass and not more than 15% by mass, still more preferably not less than 1% by mass and not more than 10% by mass, most preferably not less than 1% by mass and not more than 5% by mass. When the amount of the photocatalyst is in the above-defined range, in removing NOx, particularly in removing NOx in the air, the production of intermediate products such as $NO_2$ can be suppressed while enhancing the amount of NOx removed and, at the same time, excellent photocatalyst corrosion resistance can be exerted even when an organic material is contained in the substrate.

In a preferred embodiment of the present invention, the number average particle diameter of the photocatalytic titanium oxide particles as determined by measuring the length of 100 randomly selected particles in a visual field at a magnification of 200,000 times under a scanning electron microscope is more than 10 nm and not more than 100 nm, more preferably not less than 10 nm and not more than 60 nm. When the size of the photocatalytic titanium oxide particles is regulated in the above-defined range, the gas decomposition activity of the photocatalyst is more stably exerted.

Further, in the second embodiment according to the present invention, the photocatalyst layer further comprises silica particles. The presence of silica particles can realize the suppression of the production of intermediate products such as $NO_2$ while enhancing the amount of NOx removed in removing NOx, particularly in removing NOx in the air and, at the same time, can realize an improvement in hydrophilicity persistence of the photocatalyst layer.

The content of the silica particles in the photocatalyst layer is not less than 51% by mass and not more than 98% by mass, more preferably not less than 56% by mass and not less than 95% by mass, most preferably not less than 61% by mass and not more than 95% by mass. When the content of the silica particles is in the above-defined range, in removing NOx, particularly in removing NOx in the air, the production of intermediate products such as $NO_2$ can be suppressed while enhancing the amount of NOx removed and, at the same time, in application to an organic substrate, a deterioration in the organic substrate can be greatly suppressed.

In a preferred embodiment of the present invention, the number average particle diameter of the silica particles as determined by measuring the length of 100 randomly selected particles in a visual field at a magnification of 200,000 times under a scanning electron microscope is preferably more than 5 nm and not more than 50 nm, more preferably not less than 10 nm and not more than 40 nm, still more preferably not less than 10 nm and not more than 30 nm. When the size of the silica particles is regulated to the above-defined range, in removing NOx, particularly in removing NOx in the air, the production of intermediate products such as $NO_2$ can be suppressed while enhancing the amount of NOx removed and, at the same time, the abrasion resistance of the photocatalyst layer can be improved.

In the second embodiment of the present invention, the photocatalyst layer may comprise, in addition to photocatalytic titanium oxide particles and silica particles, other inorganic oxide particles. In a preferred embodiment, the content of the particulate component in the photocatalyst layer is not less than 85% by mass and not more than 99% by mass, more preferably not less than 90% by mass and not more than 95% by mass. The addition amount of the particulate component other than the photocatalytic titanium oxide particles and the silica particles is preferably not less than 0% by mass and not more than 47% by mass. Inorganic oxide particles may be mentioned as the particulate component other than the photocatalytic titanium oxide particles and the silica particles. Examples thereof include particles of single oxides such as zinc oxide, tin oxide, tungsten oxide, alumina, zirconia, ceria, yttria, boronia, magnesia, calcia, ferrite, amorphous form of titania, and hafnia; and particles of composite oxides such as strontium titanate, barium titanate, and calcium silicate.

In a preferred embodiment of the present invention, the number average particle diameter of the particulate component other than the photocatalytic titanium oxide particles and the silica particles as determined by measuring the length of 100 randomly selected particles in a visual field at a magnification of 200,000 times under a scanning electron microscope is preferably more than 1 nm and not more than 100 nm, more preferably not less than 3 nm and not more than 100 nm. When the size of the particles is regulated to the above-defined range, in removing NOx, particularly in removing NOx in the air, the production of intermediate products such as $NO_2$ can be suppressed while enhancing the amount of NOx removed and, at the same time, the abrasion resistance of the photocatalyst layer can be improved.

In a preferred embodiment of the present invention, the thickness of the photocatalyst layer is preferably not more than 3 $\mu$m, more preferably not less than 0.2 $\mu$m and not more than 3 $\mu$m, most preferably not less than 0.5 $\mu$m and not more than 3 $\mu$m. When the thickness of the photocatalyst layer is less than 3 $\mu$m, in removing NOx, particularly in removing NOx in the air, the transparency of the photocatalyst layer is ensured, and, at the same time, the production of intermediate products such as $NO_2$ can be suppressed while enhancing the amount of NOx removed. A photocatalyst layer thickness of not less than 0.5 $\mu$m is advantageous in that, when the substrate is an organic substrate, ultraviolet light is less likely to reach the substrate and, thus, the weather resistancce of the substrate can be improved.

Further, in a preferred embodiment of the present invention, in order to develop a high level of antimicrobial, antiviral, and antimold properties, at least one metal selected from the group consisting of vanadium, iron, cobalt, nickel, palladium, zinc, ruthenium, rhodium, copper, cuprous oxide, cupric oxide, silver, silver oxide, platinum, and gold and/or at least one metal compound of the metal(s) may be allowed to exist in the photocatalyst layer. Preferably, the presence of the metal and/or the metal compound does not affect the formation of gaps among the photocatalytic titanium oxide particles and the inorganic oxide particles. Accordingly, the addition amount of the metal and/or the metal compound may be very small, and the amount of the metal and/or the metal compound necessary for the development of the action is very small. Specifically, the addition amount is preferably approximately 0.001 to 10% by mass, more preferably 0.05 to 5% by mass, based on the photocatalyst.

In the second aspect of the present invention, the content of the product obtained by drying the water soluble zirconium compound in the photocatalyst layer is not less than 1% by mass and not more than 15% by mass, more preferably not less than 1% by mass and not more than 10% by mass in terms of ZrO$_2$ based on the photocatalyst layer. In a preferred embodiment, the content of the water soluble zirconium compound is 0.1 to 5 parts by mass, more preferably 0.2 to 3 parts by mass, still more preferably 0.5 to 2 parts by mass, based on the photocatalytic titanium oxide particles.

In the present invention, examples of water soluble zirconium compounds include basic water soluble zirconium compounds such as ammonium zirconium carbonate, potassium zirconium carbonate, ammonium zirconium carbonate, and sodium zirconium phosphate, and acidic water soluble zirconium compounds such as zirconium oxychloride, zirconium hydroxychloride, zirconium nitrate, zirconium sulfate, and zirconium acetate. They may be used either solely or as a mixture of two or more.

In the present invention, not less than 0% by mass and not more than 10% by mass of a binder may further be contained as an optional component. At least one material selected, for example, from the group consisting of silicone emulsions, modified silicone emulsions, fluororesin emulsions, silicone resins, modified silicone resins, hydrolyzates/condensates of alkyl silicates, alkali silicates, and hydrolyzates/condensates of metal alkoxides is preferred as the binder.

An ultraviolet shielding agent or an organic antimold agent may be added as an optional component in the photocatalyst layer according to the present invention. Preferably, the ultraviolet shielding agent, the organic antimold agent and the like are not added at all. When the ultraviolet shielding agent, the organic antimold agent and the like are added, the addition amount is not less than 0% by mass and not more than 15% by mass, preferably not less than 0% by mass and not more than 10% by mass, more preferably not less than 0% by mass and not more than 5% by mass on the assumption that the photocatalyst layer is totally 100% by mass. Preferably, the presence thereof does not affect the formation of gaps among the photocatalytic titanium oxide particles and the inorganic oxide particles.

Photocatalytic coating liquid

According to another aspect of the present invention, there is provided a photocatalytic coating liquid suitable for use in the formation of the photocatalyst-coated body according to the present invention, the photocatalytic coating liquid comprising at least photocatalytic titanium oxide particles, silica particles, a water soluble zirconium compound, and water, wherein, based on the total solid content of the photocatalytic coating liquid, the content of the photocatalytic titanium oxide particles is not less than 1% by mass and not more than 20% by mass, the content of the silica particles is not less than 51% by mass and not more than 98% by mass, the content of the water soluble zirconium compound in terms of ZrO$_2$ is not less than 1% by mass and not more than 15% by mass, and the content of the particulate component other than the photocatalytic titanium oxide particles and the silica particles is not less than 0% by mass and not more than 47% by mass, provided that the total content of the particulate component is not less than 85% by mass and not more than 99% by mass.

The photocatalytic titanium oxide particles, the silica particles, the product obtained by drying water soluble zirconium compound, and the optional component contained in the coating liquid according to the present invention may be substantially the same as the components constituting the coated body, except that the above components constitutes a liquid composition. Materials mentioned as a preferred embodiment for these components may be added as preferred materials in the coating liquid according to the present invention.

The coating liquid may have any composition as long as the above composition can be realized after drying. Accordingly, the coating liquid will be described regardless of whether the contents including already described matter are repeatedly described for clarity.

The coating liquid according to the present invention comprises photocatalytic titanium oxide particles. The photocatalytic titanium oxide particles used in the present invention are not particularly limited as long as the particles are titanium oxide particles having photocatalytic activity. Preferred examples thereof include particles of anatase form of titanium oxide, rutile form of titanium oxide, and brookite form of titanium oxide. Particles of anatase form of titanium oxide are more preferred.

In a preferred embodiment of the present invention, the content of the photocatalytic titanium oxide particles based on the solid content of the photocatalytic coating liquid is not less than 1% by mass and not more than 20% by mass, more preferably not less than 1% by mass and not more than 15% by mass, still more preferably not less than 1% by mass and not more than 5% by mass. When the content of the photocatalytic titanium oxide particles is in the above-defined range, a photocatalytic coating liquid from which an excellent photocatalyst-coated body can be produced can be provided. In particular, a photocatalyst-coated body can be produced that, in removing NOx, particularly in removing NOx in the air, can suppress the production of intermediate products such as NO$_2$ while enhancing the amount of NOx removed and, at the same time, can exert excellent photocatalyst corrosion resistance even when an organic material is contained in the substrate.

In a preferred embodiment of the present invention, the number average particle diameter of the product obtained by drying the photocatalytic titanium oxide particles as determined by measuring the length of 100 randomly selected particles in a visual field at a magnification of 200,000 times under a scanning electron microscope is preferably more than 10 nm and not more than 100 nm, more preferably not less than 10 nm and not more than 60 nm. When the size of the photocatalytic titanium oxide particles is regulated in the above-defined range, a photocatalytic coating liquid from which an excellent photocatalyst-coated body can be produced can be provided. In particular, a photocatalyst-coated body that can more stably exert gas decomposition activity of the photocatalyst can be produced.

Further, the photocatalytic coating liquid according to the present invention further comprises silica particles. The presence of the silica particles can realize the provision of a photocatalytic coating liquid from which an excellent photocatalyst-coated body can be produced. In particular, a photocatalyst-coated body can be produced that, in removing NOx, particularly in removing NOx in the air, can suppress the production of intermediate products such as $NO_2$ while enhancing the amount of NOx removed and, at the same time, is improved in hydrophilicity persistence of the photocatalyst layer..

In a preferred embodiment of the present invention, the content of the silica particles based on the solid content of the photocatalytic coating liquid is preferably not less than 51% by mass and not more than 98% by mass, more preferably not less than 61% by mass and not more than 95% by mass, most preferably 61% by mass and not more than 95% by mass. When the content of the silica particles is in the above-defined range, a photocatalytic coating liquid from which an excellent photocatalyst-coated body can be produced can be provided. In particular, a photocatalyst-coated body can be produced that, in removing NOx, particularly in removing NOx in the air, can suppress the production of intermediate products such as $NO_2$ while enhancing the amount of NOx removed and, at the same time, in application to an organic substrate, can significantly suppress a deterioration in the organic substrate.

In a preferred embodiment of the present invention, the number average particle diameter of the silica particles as determined by measuring the length of 100 randomly selected particles in a visual field at a magnification of 200,000 times under a scanning electron microscope is preferably more than 5 nm and not more than 50 nm, more preferably not less than 10 nm and not more than 40 nm, still more preferably not less than 10 nm and not more than 30 nm. When the size of the silica particles is regulated to the above-defined range, a photocatalytic coating liquid from which an excellent photocatalyst-coated body can be produced can be provided. In particular, a photocatalyst-coated body can be produced that, in removing NOx, particularly in removing NOx in the air, can suppress the production of intermediate products such as $NO_2$ while enhancing the amount of NOx removed and, at the same time, can improve the abrasion resistance of the photocatalyst layer.

In the second embodiment of the present invention, the photocatalytic coating liquid may comprise, in addition to photocatalytic titanium oxide particles and silica particles, other inorganic oxide particles. In a preferred embodiment, the content of the particulate component in the photocatalyst layer is not less than 85% by mass and not more than 99% by mass, more preferably not less than 90% by mass and not more than 95% by mass. The addition amount of the particulate component other than the photocatalytic titanium oxide particles and the silica particles is preferably not less than 0% by mass and not more than 47% by mass. Inorganic oxide particles may be mentioned as the particulate component other than the photocatalytic titanium oxide particles and the silica particles. Examples thereof include particles of single oxides such as zinc oxide, tin oxide, tungsten oxide, alumina, zirconia, ceria, yttria, boronia, magnesia, calcia, ferrite, amorphous form of titania, and hafnia; and particles of composite oxides such as strontium titanate, barium titanate, and calcium silicate.

In a preferred embodiment of the present invention, the number average particle diameter of the particulate component other than the photocatalytic titanium oxide particles and the silica particles as determined by measuring the length of 100 randomly selected particles in a visual field at a magnification of 200,000 times under a scanning electron microscope is preferably more than 1 nm and not more than 100 nm, more preferably not less than 3 nm and not more than 100 nm. When the size of the particles is regulated to the above-defined range, in removing NOx, particularly in removing NOx in the air, the production of intermediate products such as $NO_2$ can be suppressed while enhancing the amount of NOx removed and, at the same time, the abrasion resistance of the photocatalyst layer can be improved.

The photocatalytic coating liquid according to the present invention comprises at least a water soluble zirconium compound. The content of the product obtained by drying water soluble zirconium compound is not less than 1% by mass and not more than 15% by mass, more preferably not less than 1% by mass and not more than 10% by mass, in terms of $ZrO_2$, provided that the total solid content of the coating liquid is 100% by mass. Further, in a preferred embodiment, the content of the water soluble zirconium compound is preferably 0.1 to 5 parts by mass, more preferably 0.2 to 3 parts by mass, still more preferably 0.5 to 2 parts by mass, based on the photocatalytic titanium oxide particles.

In the present invention, examples of water soluble zirconium compounds include basic water soluble zirconium compounds such as ammonium zirconium carbonate, potassium zirconium carbonate, ammonium zirconium carbonate, and sodium zirconium phosphate, and acidic water soluble zirconium compounds such as zirconium oxychloride, zirconium hydroxychloride, zirconium nitrate, zirconium sulfate, and zirconium acetate. They may be used either solely or as a mixture of two or more.

In the photocatalytic coating liquid according to the present invention, the total content of the binder component is not less than 0% by mass and not more than 10% by mass. At least one material selected, for example, from the group consisting of silicone emulsions, modified silicone emulsions, fluororesin emulsions, silicone resins, modified silicone resins, hydrolyzates/condensates of alkyl silicates, alkali silicates, and hydrolyzates/condensates of metal alkoxides is suitable as the binder.

The photocatalytic coating liquid according to the present invention is produced by dispersing or dissolving the components described above in connection with the photocatalyst layer in a solvent at the above-defined mass ratio. In the present invention, the solvent is not particularly limited as long as the components can be dispersed or dissolved. However, water or an organic solvent, for example, ethanol, is preferred.

The solid content of the photocatalytic coating liquid according to the present invention is not particularly limited. However, the solid content of the photocatalytic coating liquid is preferably 1 to 20% by mass from the viewpoint of easiness of coating, more preferably 1 to 10°lo by mass. Accordingly, the amount of the solvent used is such that can provide the solid content. The components constituting the photocatalytic coating composition can be evaluated by separating the coating liquid by ultrafiltration into a particulate component and a filtrate, analyzing the particulate component and the filtrate, for example, by infrared spectroscopy, gel permeation chromatography, or X-ray fluorescence spectroscopy, and analyzing the spectra.

The photocatalytic coating liquid according to the present invention may further comprise an ultraviolet shielding agent, an organic antimold agent and the like. Preferably, the ultraviolet shielding agent, the organic antimold agent and the like are not added at all. When they are added, the addition amount thereof based on the solid content of the photocatalytic coating liquid is not less than 0% by mass and not more than 15% by mass, preferably not less than 0% by mass and not more than 10% by mass, still more preferably not less than 0% by mass and not more than 5% by mass. Preferably, the presence thereof does not affect the formation of gaps among the photocatalytic titanium oxide particles and the inorganic oxide particles after coating on the substrate and drying the coating.

From the viewpoint of developing a higher level of antimicrobial, antiviral, and antimold properties, the photocatalytic coating liquid according to the present invention may contain at least one metal and/or compound of metal selected from the group consisting of vanadium, iron, cobalt, nickel, palladium, zinc, ruthenium, rhodium, copper, cuprous oxide, cupric oxide, silver, silver oxide, platinum, and gold. Preferably, the presence thereof does not affect the formation of gaps among the photocatalytic titanium oxide particles and the inorganic oxide particles. Accordingly, the addition amount thereof may be such a very small amount that is necessary for developing the action. Specifically, the addition amount thereof is preferably approximately 0.001 to 10% by mass, more preferably 0.05 to 5% by mass, based on the photocatalyst.

The photocatalytic coating liquid according to the present invention may further comprise a surfactant as an optional component, and the addition amount thereof is not less than 0 part by mass and less than 10 parts by mass, preferably not less than 0 part by mass and not more than 8 parts by mass, more preferably not less than 0 part by mass and not more than 6 parts by mass, based on the mass of the product obtained by drying the photocatalytic coating liquid. The addition of the surfactant can realize leveling, that is, a smooth and even coating surface. The surfactant is a component that is effective in improving the wettability of the photocatalytic coating liquid. When the wettability is not important, in some cases, preferably, the surfactant is not substantially contained or is not contained at all.

The surfactant may be properly selected by taking into consideration the dispersion stability of the photocatalyst and the inorganic oxide particles and the wetting capability when the coating liquid is coated on the intermediate layer. However, the surfactant is preferably a nonionic surfactant. More preferred are ether-type nonionic surfactants, ester-type nonionic surfactants, polyalkylene glycol nonionic surfactants, fluoro nonionic surfactants, and silicone nonionic surfactants.

Process for producing photocatalyst-coated body

The photocatalyst-coated body according to the present invention can be produced by coating the photocatalytic coating liquid according to the present invention on an optionally heated substrate. Coating methods usable herein include commonly extensively used methods, for example, brush coating, roller coating, spray coating, roll coater coating, flow coater coating, dip coating, flow coating, and screen printing. After coating of the coating liquid onto the substrate, the coated substrate may be dried at room temperature, or alternatively may if necessary be heat dried. Since, however, there is a possibility that, when the coating is heated to such an extent that sintering proceeds, the amount of gaps among the particles is reduced and, consequently, satisfactory photocatalytic activity cannot be provided, it is preferred to select heating temperature and heating time that do not affect the formation of gaps at all or do not significantly affect the formation of gaps. For example, the drying temperature is 5°C or above and 500°C or below. When a resin is contained in at least a part of the substrate, the drying temperature is preferably, for example, 10°C or above and 200°C or below when the heat resistant temperature of the resin and the like are taken into consideration.

EXAMPLES

The present invention is further illustrated by the following Examples that are not intended as a limitation of the invention.

Example A1

A flat plate-shaped colored organic material-coated body having a size of 50 mm x 100 mm was first provided as a substrate. The colored organic material-coated body is one obtained by coating a red acrylic coating material onto a ceramic siding substrate subjected to sealer treatment and satisfactorily drying and curing the coating.

A photocatalytic coating liquid was then provided. The photocatalytic coating liquid was prepared by mixing an aqueous dispersion of anatase form of titania (average particle diameter: 40 nm), water dispersible colloidal silica (average particle diameter: 20nm), and ammonium zirconium carbonate into water as a solvent and adjusting the solid content to 5.5% by mass. The mass ratio among the solid content of $TiO_2$, the solid content of colloidal silica, and the content of ammonium zirconium carbonate in terms of $ZrO_2$ was 2.00 : 88.2 : 9.80.

The photocatalytic coating liquid thus obtained was spray-coated on the plate-shaped colored organic material-coated body, and the coating was dried at room temperature to obtain a photocatalyst-coated body. The thickness of the photocatalyst layer was 0.5 $\mu$m.

Example A2

A sample was prepared in the same manner as in Example 1, except that the mass ratio among the solid content of $TiO_2$, the solid content of colloidal silica, and the content of ammonium zirconium carbonate in terms of $ZrO_2$ in the photocatalytic coating liquid was 5.00 : 85.5 : 9.50.

Example A3

A sample was prepared in the same manner as in Example 1, except that the mass ratio among the solid content of $TiO_2$, the solid content of colloidal silica, and the content of ammonium zirconium carbonate in terms of $ZrO_2$ in the photocatalytic coating liquid was 10.0 : 81.0 : 9.00.

Example A4

A sample was prepared in the same manner as in Example 1, except that a colored organic material-coated body obtained by coating a red acrylic coating material onto an aluminum substrate and satisfactorily drying and curing the coating was used as the colored organic material-coated body.

Example A5

A sample was prepared in the same manner as in Example A2, except that a colored organic material-coated body obtained by coating a red acrylic coating material onto an aluminum substrate and satisfactorily drying and curing the coating was used as the colored organic material-coated body.

Example A6

A sample was prepared in the same manner as in Example A3, except that a colored organic material-coated body obtained by coating a red acrylic coating material onto an aluminum substrate and satisfactorily drying and curing the coating was used as the colored organic material-coated body.

Comparative Example A1

A sample was prepared in the same manner as in Example A1, except that the mass ratio among the solid content of $TiO_2$ the solid content of colloidal silica, and the content of ammonium zirconium carbonate in terms of $ZrO_2$ in the photocatalytic coating liquid was 5.0 : 95.0 : 0.

Comparative Example A2

A sample was prepared in the same manner as in Example A1, except that the mass ratio among the solid content of $TiO_2$ the solid content of colloidal silica, and the content of ammonium zirconium carbonate in terms of $ZrO_2$ in the photocatalytic coating liquid was 10.0 : 90.0 : 0.

Evaluation Experiment A1

For Examples A2, A3, A5, and A6, an NOx decomposition test was carried out by the following method. At the outset, the samples were pretreated by exposure to BLB light at $1mW/cm^2$ for 5 hr or longer. A sheet of the coated body sample was set within a reaction vessel described in JIS R 1701-1. An NO gas was mixed into air adjusted to 25°C and 50% RH until the concentration of NO reached approximately 1000 ppb. The mixed gas was supplied into the reaction vessel under light shielded conditions at a flow rate of 1.5 liters/min for 30 min. Thereafter, in the gas-filled state, BLB light adjusted to $1mW/cm^2$ was applied thereto for 20 min. In the gas-filled state, the reaction vessel was placed under light shielded conditions. The amount of NOx removed was calculated by the following equation from the NO and $NO_2$ concentrations before and after BLB light irradiation.

$$\text{Amount of NOx removed (ppb)} = [\text{NO (after irradiation)} - \text{NO (at the time of irradiation)}] - [NO_2 \text{ (at the time of irradiation)} - NO_2 \text{ (after irradiation)}].$$

As a result, the amount of NOx removed was 80 for Example 2, 82 for Example 3, 81 for Example 5, and 83 for Example 6.

Evaluation Experiment A2

For Examples A2 and A5, the hydrophilicity of the photocatalyst was evaluated. Each sample was matured in a dark place for one day. The samples were allowed to stand under BLB light adjusted to $1 mW/cm^2$ (wavelength of bright line spectrum: 351 nm) for 4 days in such a state that the photocatalyst-coated surface faced upward. The contact angle of the surface of the samples with water was measured with a contact angle meter (model CA-X150 manufactured by Kyowa Interface Science Co., Ltd.). As a result, for all the samples, the contact angle with water was less than 5 degrees, indicating that the samples had good hydrophilicity.

Evaluation Experiment A3

For Examples A2 and A5, the samples were introduced into a sunshine weather-o-meter (S-300C manufactured by Suga Test Instruments Co., Ltd.) specified in JIS B 7753 for 1200 hr. The contact angle of the samples with water was then measured. As a result, for both the samples, the contact angle with water was less than 5 degrees, indicating that the samples had good hydrophilicity.

Evaluation Experiment A4

For Examples A2, A3, A5, and A6 and Comparative Examples A1 and A2, a wet-type decomposing capability specified in JIS R 1703-2 was measured. As a result, the decomposition activity index was 8 and 14 respectively for Comparative Examples A1 and A2, whereas the decomposition activity index was large and was 17, 23, 18, and 22 respectively for Examples A2, A3, A5, and A6.

Examples A11 to A13 and Comparative Examples A11 to A13

Samples were prepared in the same manner as in Example A1, except that the mass ratio among the solid content of $TiO_2$, the solid content of colloidal silica, and the content of ammonium zirconium carbonate in terms of $ZrO_2$ was as specified in the following table.

Table 1

| | $TiO_2$/$SiO_2$/zirconium carbonate compound (in terms of oxide) |
|---|---|
| Example A11 | 2/94/4 |
| Example A12 | 5/85/10 |
| Example A13 | 10/70/20 |
| Comparative Example A11 | 2/98/0 |
| Comparative Example A12 | 5/95/0 |

(continued)

|  | TiO$_2$/SiO$_2$/zirconium carbonate compound (in terms of oxide) |
|---|---|
| Comparative Example A13 | 10/90/0 |

Evaluation Test A5: Evaluation of Weatherability

The following weatherability test was carried out for the samples thus obtained. Specifically, the photocatalyst-coated body was introduced into a sunshine weather-o-meter (S-300C manufactured by Suga Test Instruments Co., Ltd.) specified in JIS B 7753. After the elapse of times specified in the following table, the test specimen were taken out. Before and after the acceleration test, a color difference ΔE was measured with a colorimetric meter ZE 2000 manufactured by Nippon Denshoku Co., Ltd. The results were as shown in the following table.

Table 2

|  | Time and color difference ΔE | | | | | |
|---|---|---|---|---|---|---|
|  | 256 hr | 577 hr | 916 hr | 1205 hr | 1475 hr | 1638 hr |
| Example A11 | 0.57 | 0.57 | 2.01 | 3.91 | 5.79 | 6.32 |
| Example A12 | 0.82 | 1.83 | 4.66 | 7.21 | 9.60 | 10.33 |
| Example A13 | 0.50 | 3.16 | 6.29 | 9.00 | 11.48 | 12.18 |
| Comparative Example A11 | 0.80 | 2.85 | 4.76 | 6.58 | 8.26 | 8.83 |
| Comparative Example A12 | 1.52 | 6.20 | 9.54 | 12.13 | 14.38 | 15.10 |
| Comparative Example A13 | 3.22 | 9.02 | 12.64 | 14.72 | 16.65 | 17.34 |

Examples A14 and A15 and Comparative Example A14

A flat plate-shaped colored organic material-coated body having a size of 50 mm x 100 mm was first provided as a substrate. The colored organic material-coated body is one obtained by coating a black acrylic silicone coating material onto a ceramic siding substrate subjected to sealer treatment and satisfactorily drying and curing the coating. Samples were prepared using the substrate in the same manner as in Example A1, except that the mass ratio among the solid content of TiO$_2$, the solid content of colloidal silica, and the content of ammonium zirconium carbonate in terms of ZrO$_2$ was as shown in the following table.

Table 3

|  | TiO$_2$/SiO$_2$/zirconium carbonate compound (in terms of oxide) |
|---|---|
| Example A14 | 10/55/35 |
| Example A15 | 15/50/35 |
| Comparative Example A14 | 30/45/25 |

Evaluation of Weatherability

For the samples, the weatherability test was carried out in the same manner as in the evaluation test A5. The results were as shown in the following table.

Table 4

|  | Time and color difference ΔE | | | | |
|---|---|---|---|---|---|
|  | 160 hr | 337 hr | 480 hr | 633 hr | 786 hr |
| Example A14 | 1.26 | 1.39 | 1.66 | 1.73 | 1.91 |
| Example A15 | 1.21 | 1.31 | 1.66 | 1.76 | 1.88 |
| Comparative Example A14 | 1.72 | 1.92 | 2.11 | 2.37 | 2.62 |

Examples B1 to B8

Photocatalytic coating liquids were provided as follows. An aqueous dispersion of anatase form of titania (number average particle diameter: 40 nm), water dispersible colloidal silica (number average particle diameter: 10 nm), and ammonium zirconium carbonate were mixed into water as a solvent, and the solid content was adjusted to 5.5% by mass to give photocatalytic coating liquids. Here the mass ratio among the solid content of $TiO_2$, the solid content of colloidal silica, and the solid content of ammonium zirconium carbonate in terms of $ZrO_2$ was as shown in the following table. In Example B6, in addition to the colloidal silica, an aqueous dispersion of tin oxide (number average particle diameter: 2 nm) was added as inorganic oxide particles in an amount specified in the table.

For the coating liquids, the number average particle diameter was determined by observing the product obtained by drying thereof under a scanning electron microscope and measuring the length of 100 randomly selected particles in a visual field at a magnification of 200,000 times. This is true of the following Comparative Examples.

The photocatalytic coating liquids were coated onto a surface of a substrate, the surface being coated with an acrylic silicone, and the coating was dried at room temperature to obtain photocatalyst-coated bodies. The thickness of the photocatalyst layer in the photocatalyst-coated bodies thus obtained was 0.8 μm.

Comparative Example B1 to B4

Samples were prepared in the same manner as in Example B1, except that the mass ratio among the solid content of $TiO_2$ the solid content of colloidal silica, and the solid content of ammonium zirconium carbonate in terms of $ZrO_2$ in the photoctalytic coating liquids was as shown in the following table. The thickness of the photocatalyst layer in the photocatalyst-coated bodies thus obtained was 0.8 μm.

Evaluation test B1: NOx Removing Test

An NOx removing test was carried out as follows. At the outset, the samples were pretreated by exposure to BLB light at 1mW/cm$^2$ for not less than 5 hr. The samples were then immersed in distilled water for 2 hr and were then dried at 50°C for not less than 30 min. Thereafter, an NOx removing test was carried out by a method described in JIS R 1701-1, and the amount of NOx removed (NOx) (μmol) was calculated.

The relative production rate R of $NO_2$ as an intermediate product was calculated by the following equation.

$$R\ (\%) = [NO_2\ (\text{at the time of irradiation}) - NO_2\ (\text{after irradiation})]/$$

$$[NO\ (\text{after irradiation}) - NO\ (\text{at the time of irradiation})]$$

The results were as shown in Table 5.
Table 5

| | | TiO$_2$/SiO$_2$/zircomum carbonate compound (in terms of oxide) | SnO$_2$ | ΔNOx | R (%) |
|---|---|---|---|---|---|
| | Example B1 | 3 5/93/3 5 | | 064 | 63 0 |
| | Example B2 | 5/92 5/2 5 | | 1 51 | 54 3 |
| | Example B3 | 5/90/5 | | 1 78 | 53 4 |
| | Example B4 | 5/85/10 | | 1 14 | 52 3 |
| | Example B5 | 10/81/9 | | 2 66 | 51 2 |
| | Example B6 | 10/55/10 | 25 | 242 | 59 |
| | Example B7 | 10/72/18 | | 067 | 36 8 |
| | Example B8 | 15/70/15 | | 2 17 | 60 6 |
| Comparative Example B1 | | 3 5/96 5/0 | | 024 | 73 6 |
| Comparative Example B2 | | 5/95/0 | | 0 88 | 64 7 |

(continued)

| | TiO$_2$/SiO$_2$/zircomum carbonate compound (in terms of oxide) | SnO$_2$ | ΔNOx | R (%) |
|---|---|---|---|---|
| Comparative Example B3 | 10/90/0 | | 1 69 | 60 6 |
| Comparative Example B4 | 15/85/0 | | 1 95 | 63 9 |

**Claims**

1. A photocatalyst-coated body comprising a substrate; and a photocatalyst layer provided on the substrate, the photocatalyst layer comprising at least photocatalytic titanium oxide particles, silica particles, and a product obtained by drying water soluble zirconium compound, and
   when the photocatalyst layer is presumed to be totally 100% by weight,
   the content of the photocatalytic titanium oxide particles being not less than 1% by mass and not more than 20% by mass,
   the content of the silica particles being not less than 51% by mass and not more than 98% by mass, and
   the content of the product obtained by drying water soluble zirconium compound being not less than 1% by weight and not more than 48% by mass in terms of zirconium oxide (ZrO$_2$).

2. The photocatalyst-coated body according to claim 1, wherein the content of the product obtained by drying water soluble zirconium compound in the photocatalyst layer is not less than 1% by mass and not more than 15% by mass in terms of ZrO$_2$
   the photocatalyst layer contains not less than 0% by mass and not more than 47% by mass of a particulate component other than the photocatalytic titanium oxide particles and the silica particles, and
   the total content of the particulate component in the photocatalyst layer is not less than 85% by mass and not more than 99% by mass.

3. The photocatalyst-coated body according to claim 1 or 2, wherein the water soluble zirconium compound is at least one compound selected from the group consisting of basic water soluble zirconium compounds and acidic water soluble zirconium compounds.

4. The photocatalyst-coated body according to claim 3, wherein the basic water soluble zirconium compound is ammonium zirconium carbonate, potassium zirconium carbonate, ammonium zirconium carbonate, or sodium zirconium phosphate, and the acidic water soluble zirconium compound is zirconium oxychloride, zirconium hydroxychloride, zirconium nitrate, zirconium sulfate, and zirconium acetate.

5. The photocatalyst-coated body according to any one of claims 1 to 4, wherein the surface of the substrate contains an organic material and the photocatalyst layer is provided on the surface.

6. The photocatalyst-coated body according to any one of claims 1 to 5, wherein the number average particle diameter of the photocatalytic titanium oxide particles as determined by measuring the length of 100 randomly selected particles in a visual field at a magnification of 200,000 times under a scanning electron microscope is more than 10 nm and not more than 100 nm.

7. The photocatalyst-coated body according to any one of claims 3 to 6, wherein the number average particle diameter of the silica particles as determined by measuring the length of 100 randomly selected particles in a visual field at a magnification of 200,000 times under a scanning electron microscope is more than 5 nm and not more than 50 nm.

8. The photocatalyst-coated body according to any one of claims 1 to 7, wherein the thickness of the photocatalyst layer is less than 3 μm.

9. A photocatalytic coating liquid comprising at least photocatalytic titanium oxide particles, silica particles, a water soluble zirconium compound, and water, wherein, based on the total solid content of the photocatalytic coating liquid, the proportion of the photocatalytic titanium oxide particles is not less than 1% by mass and not more than 20% by mass,
   the proportion of the silica particles is not less than 51% by mass and not more than 98% by mass, and

the proportion of the water soluble zirconium compound in terms of $ZrO_2$ is not less than 1% by mass and not more than 48% by mass.

10. The photocatalytic coating liquid according to claim 9, which

has a content of the water soluble zirconium compound in terms of $ZrO_2$ in the photocatalyst layer of not less than 1% by mass and not more than 15% by mass,

further comprises not less than 0% by mass and not more than 47% by mass of a particulate component other than the photocatalytic titanium oxide particles and the silica particles, and

has a total particulate component content of not less than 85% by mass and not more than 99% by mass.

11. The photocatalytic coating liquid according to claim 9 or 10, wherein the water soluble zirconium compound is at least one compound selected from the group consisting of basic water soluble zirconium compounds and acidic water soluble zirconium compounds.

12. The photocatalytic coating liquid according to claim 11, wherein the basic water soluble zirconium compound is ammonium zirconium carbonate, potassium zirconium carbonate, ammonium zirconium carbonate, or sodium zirconium phosphate, and the acidic water soluble zirconium compound is zirconium oxychloride, zirconium hydroxychloride, zirconium nitrate, zirconium sulfate, and zirconium acetate.

13. The photocatalytic coating liquid according to any one of claims 9 to 12, wherein the number average particle diameter of the photocatalytic titanium oxide particles as determined by measuring the length of 100 randomly selected particles in a visual field at a magnification of 200,000 times under a scanning electron microscope is more than 10 nm and not more than 100 nm.

14. The photocatalytic coating liquid according to any one of claims 9 to 13, wherein the number average particle diameter of the silica particles as determined by measuring the length of 100 randomly selected particles in a visual field at a magnification of 200,000 times under a scanning electron microscope is more than 5 nm and not more than 50 nm.

15. Use of a photocatalyst-coated body according to any one of claims 1 to 8 for the decomposition of NOx.

16. A method for the decomposition of NOx, the method comprising bringing a photocatalyst-coated body according to any one of claims 1 to 8 and NOx into contact with each other.

| | | International application No. |
|---|---|---|
| | **INTERNATIONAL SEARCH REPORT** | PCT/JP2011/057383 |

A.   CLASSIFICATION OF SUBJECT MATTER
*B01J35/02*(2006.01)i, *B01J21/06*(2006.01)i, *B05D5/00*(2006.01)i, *C09D1/00* (2006.01)i

According to International Patent Classification (IPC) or to both national classification and IPC

B.   FIELDS SEARCHED

Minimum documentation searched (classification system followed by classification symbols)
B01J21/00-38/74, B05D1/00-7/26, C09D1/00-201/10

Documentation searched other than minimum documentation to the extent that such documents are included in the fields searched
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y | WO 1998/015600 A1   (Nippon Soda Co., Ltd.),<br>16 April 1998 (16.04.1998),<br>claims; examples; tables 1, 2<br>& US 6407033 B1          & EP 0866101 A1<br>& CN 1205024 A | 1-14<br>15,16 |
| X<br>Y | JP 2001-070801 A   (Central Glass Co., Ltd.),<br>21 March 2001 (21.03.2001),<br>claims; paragraphs [0014], [0023]; comparative example 8<br>& US 6582839 B1          & EP 1081108 A1 | 1-14<br>15,16 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    26 April, 2011 (26.04.11) | Date of mailing of the international search report<br>    17 May, 2011 (17.05.11) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/057383

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2008-264777 A  (TOTO Ltd.),<br>06 November 2008 (06.11.2008),<br>claims; paragraph [0013]; examples 6 to 9,<br>31 to 34; tables 2, 5<br>& US 2008/0254975 A1    & EP 2127762 A1<br>& WO 2008/123278 A1    & CA 2681142 A1 | 15,16 |
| Y | JP 2008-264747 A  (TOTO Ltd.),<br>06 November 2008 (06.11.2008),<br>claims; examples 8 to 11, 24 to 27; tables 2, 5<br>& US 2008/0254975 A1    & EP 2127762 A1<br>& WO 2008/123278 A1    & CA 2681142 A1 | 15,16 |

Form PCT/ISA/210 (continuation of second sheet) (July 2009)

**INTERNATIONAL SEARCH REPORT**

International application No.

PCT/JP2011/057383

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
    The invention in claim 1 cannot be considered to be novel in the light of the inventions described in the following documents 1 and 2, and does not have a special technical feature.

   Document 1: WO 1998/015600 A1 (Nippon Soda Co., Ltd.), 16 April 1998 (16.04.1998)

   Document 2: JP 2001-070801 A (Central Glass Co., Ltd.), 21 March 2001 (21.03.2001)
                                        (continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**          ☐ The additional search fees were accompanied by the applicant's protest and, where applicable, the payment of a protest fee.

                               ☐ The additional search fees were accompanied by the applicant's protest but the applicable protest fee was not paid within the time limit specified in the invitation.

                               ☐ No protest accompanied the payment of additional search fees.

Form PCT/ISA/210 (continuation of first sheet (2)) (July 2009)

**INTERNATIONAL SEARCH REPORT**

International application No.

PCT/JP2011/057383

Continuation of Box No.III of continuation of first sheet(2)

Consequently, three invention groups comprising (1) the inventions in claims 1 and claims 2 - 8 dependent on claim 1; (2) the inventions in claim 9 and claims 10 - 14 dependent on claim 9; and (3) the inventions in claims 15 and 16 have no technical relationship involving one or more of the same or corresponding special technical features, and therefore cannot be considered to be so linked as to form a single general inventive concept.

The part of the present international application, which is considered to be main invention by this International Searching Authority, is relevant to the inventions in claims 1 - 8.

Form PCT/ISA/210 (extra sheet) (July 2009)

**EP 2 551 015 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H071995171408 A
- JP 2005161204 A
- JP 2008264747 A
- WO 9928393 A
- JP 2007 A
- JP 055207 A
- JP 2009039687 A
- WO 9700134 A
- JP 2008272718 A
- JP H011989218622 A
- JP 2001162176 A
- JP 2007055207 A
- JP H091997227156 A